Europäisches Patentamt

European Patent Office

Office européen des brevets

(11) Publication number: **0 213 434**
**A1**

## (12) EUROPEAN PATENT APPLICATION

(21) Application number: 86110791.0

(22) Date of filing: 05.08.86

(51) Int. Cl.⁴ **B23D 61/18**

(30) Priority: 14.08.85 IT 2194285

(43) Date of publication of application:
11.03.87 Bulletin 87/11

(84) Designated Contracting States:
AT BE CH DE FR IT LI NL SE

(71) Applicant: **DIAMOND PAUBER S.r.l.**
**Via Bordigona, 26**
**I-54100 Massa(IT)**

(72) Inventor: **Bernieri, Paolo**
**Via Fosdinovo, 11**
**I-54037 Marina Di Massa(IT)**

(74) Representative: **Faggioni, Giovanmaria, Dr. et al**
**Fumero-Studio Consulenza Brevetti**
**Widenmayerstrasse 4/I**
**D-8000 München 22(DE)**

(54) **Diamond pin for the production of diamond wire for cutting stone materials, and wire produced with such pins.**

(57) The invention relates to a so-called "diamond pin" for producing diamond wire for cutting stone material. This diamond pin is formed from a deformable metal sleeve acting as a disposable support, and two diamond rings fixed on to the ends of the sleeve by brazing or bonding. There remains between the two diamond rings a free sleeve portion to be used for fixing to the wire by swaging.

Fig. 2

EP 0 213 434 A1

## DIAMOND PIN FOR THE PRODUCTION OF DIAMOND WIRE FOR CUTTING STONE MATERIALS, AND WIRE PRODUCED WITH SUCH PINS

This invention relates to a "diamond pin" for producing diamond wire for use in cutting stone material. The use of this diamond wire in marble and stone quarries has been widespread for a considerable time. Initially, the life of such diamond wire and the difficulties encountered in its use were attributed essentially to the structure of the diamond pin. For this reason, it was sought to improve such diamond wire by improving the abrasive pin structure (see for example US-A-3847569, US-A-4097246 and FR-A-2106017).

More recently, it has however been realized that most of the problems, the most serious of which being that of short life, were due mainly to the system used for mounting the diamond pins on the support wire.

It was sought to limit these drawbacks by improving the known methods, in particular by providing protection for the support steel cable between the diamond pins. A method of this type is illustrated for example in DE-A-2545347, in which the steel wire is protected between one cylinder and the next by a spiral of spring wire. Another method consists of forming a continuous abrasion-resistant plastics coating on the steel cable.

However, it is sufficient that a minimum quantity of abrasive dust infiltrates through a few points along the cable to rapidly cause the usual wear phenomenon.

Rapid wear is also favoured by the relative freedom of the cylinders to slide axially along the steel cable, as for example in the DE-A-2545347. In this respect, taking account of the fact that:

-none of the diamond pins ever has a circular profile which is perfectly centered with respect to the steel cable passage bore,

-the abrasive surface of the pin can comprise zones of different abrasion force,

-and the steel wire, because of its plaited conformation, has a natural tendency to rotate slowly about its axis, by which the central bore of the pin in which the cable is housed tends to become oval; it is well apparent that after a relatively short period of use each pin tends to position itself, within the cutting groove in the stone, in such a manner as to produce minimum friction, i.e. it presents the least abrasive part of its surface against the stone surface, thus making the sawing action more difficult and slower.

This serious drawback is present in all diamond wires in which the diamond pins are relatively free to slide and/or rotate on the steel support cable, as in the case for example in DE-A-2545347.

To obviate these drawbacks, the method currently widely used is to securely fix the diamond pins on to the steel cable, for example by pressure swaging the pin, as described for example in US-A-3847569.

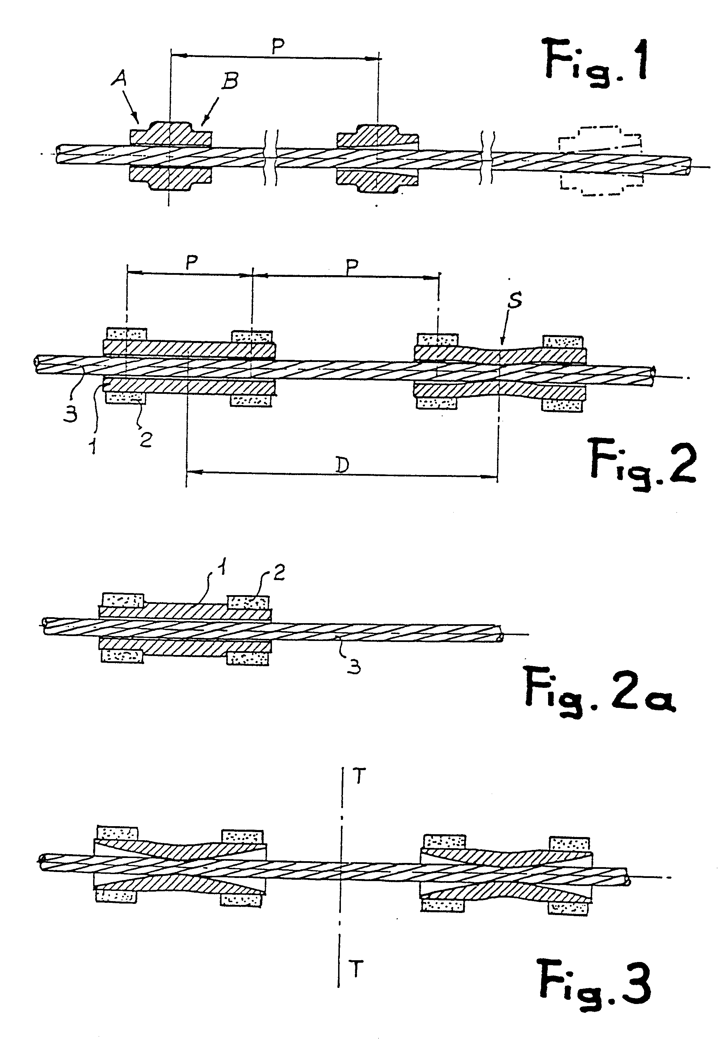

This method of fixing the pins on to the steel cable by swaging has however certain drawbacks, as apparent from Figure 1:

-firstly, because the distance P between one diamond pin and the next is relatively small (an average of between 25 and 35 mm.), swaging the pin on to the cable at such a pitch P results in a reduction in the cable flexibility;

-moreover, if the cable breaks before the pins are not completely worn, it is usual to recover them because of their high cost, and reuse them on a new cable. Recovering the pins by removing them from the cable after they have been fixed by swaging is difficult and extremely laborious. In addition to this, remounting and again swaging these deformed recovered pins on to a new cable also becomes extremely difficult;

-finally, even the manner in which wear is produced is not satisfactory. In this respect, because of the size and shape of the pins (see Figure 1), swaging is carried out at only one end, for example that indicated by A (because swaging at both ends would excessively reduce or nullify the cable flexibility).

Now with such a method of assembly, the diamond pin undergoes wear as also seen in Figure 1. As is well apparent, at the point of wear the diamond wire no longer operates correctly in that under the effect of the load applied to the wire the diamond pin rotates about the point of constriction (see the position shown by dashed lines in Figure 1) to thus lose proper bearing under a predetermined specific pressure against the base of the cutting groove, this being an essential requirement for the diamond cutting action.

These difficulties have also been stated in the Italian patent application No. 23740 A/80 filed on 28 July 1980 and the in Italian utility model application No. 22672 B/84 filed on 25 July 1984 in the name of the present applicant, to which reference should be made for further understanding of the invention.

Although the methods described in these two applications should have largely solved the difficulties. and enable strong, effective and long-lasting diamond wire to be produced, more or less the same problems have however recently appeared when extending the use of diamond wire to cutting granite and similar stone having a high quartz or silica content.

In this respect, it has been found that although it is possible to produce diamond pins able to cut such materials, it is however very difficult to effectively mount such diamond pins on the steel wire. This is because the dust produced during cutting, when mixed with water, becomes so abrasive that on using the normal assembly systems at least the following difficulties are encountered:

-accentuated, non-uniform wear of the mounting bore through the pin, with consequent impossibility of reusing an incompletely worn pin after removing the broken cable;

-wear of the spacers interposed between the cylinders with consequent increase in the play allowing actual sliding, and acceleration of the wearing process both of the steel cable and of the bore through the pin.

The object of the present invention is to provide a diamond pin of such a structure as to solve the aforesaid operating problems in a different manner from the past.

This result is attained in that the diamond pin is formed from a deformable metal sleeve acting as a disposable support, and two diamond rings fixed by brazing or bonding on to the ends of the sleeve, there remaining between the two diamond rings a free sleeve portion which is used for the fixing on to the cable by swaging.

The basic idea of the invention is therefore to use diamond pins structured in such a manner that their abrasive elements are firstly easily recoverable and reusable, and which can also be fixed on to the cable quickly, reliably and in such a manner as to enable the cable to operate under the best possible conditions, but without trying to give the cable itself maximum protection in the light of its easily replaceability.

In effect, the said DE-A-2545347 describes a cutting element with interchangeable abrasive rings. However, it must be noted that this interchangeability is purely theoretical because in reality during sawing -in particular of hard stone such as granite - both the threaded part of the sleeve forming the abrasive element and the locking nuts at its ends become so worn and dented as to make it practically impossible, or in any event economically inconvenient, to recover the abrasive rings. Moreover, the abrasive pin of DE-A-2545347 cannot be fixed on to the steel cable by the swaging method according to the invention, but has to be mounted by systems incorporating spacer elements, which have all the initially mentioned drawbacks.

Again, FR-A-1378362 describes a cutting wire with a series of tubular cutting elements mounted on the cable by swaging at their centre. However, this is a structure designed for cutting very soft or artificial stone -as is stated in the description (lines 21, 22 of column 1, page 1) and as is demonstrated by the fact that the cutting element is a simple sleeve with sharp-edged ends and a thin wall (lines 7-19, column 2, page 1) -which cannot have any application in granite cutting.

Further characteristics and advantages of the pin structure according to the present invention will be more apparent from the de scription given hereinafter of a preferred embodiment, illustrated by way of example on the accompanying drawings, in which:

Fig. 1 shows a diamond wire provided with a diamond pin of the known art, as already described;

Figs. 2 and 2a are longitudinal sections to the same scale as Fig. 1 through two different embodiments of a pin according to the present invention; and

Fig. 3 shows a diamond wire produced with diamond pins according to the invention, after accentuated wear.

As stated, the cylinder is formed from a metal sleeve 1, on the two ends of which rings 2 with an outer diamond surface are fixed, for example by braze welding or bonding.

The sleeve 1 can be simply in the form of a piece of iron or steel tube (Figure 2) comprising an inner hole having a cross-section just greater than the cross-section of the steel cable 3 on which it is to be monted. Alternatively, the sleeve 1 can be formed with two end connection shoulders (Figure 2a) for the diamond rings 2. This form can obviously be obtained from a piece of tube by machining its two ends.

The diamond rings 2 are constructed by the same method used for constructing pins of known type and diamond tools generally, such as by sintering diamond grit and metal or by electrolytically depositing diamond on a consumable metal support.

The cable used for producing the diamond wire according to the invention can be the plaited steel wire normally used for this purpose, or plaited steel wire provided with a continuous wear-resistant plastics coating, equally of known type.

When a pin 1, 2 formed in this manner has been mounted on the steel cable 3, it is swaged at S in correspondence with its centre, which could be done with a pointed punch as proposed in the said Italian utility model application No. 22672 B/84. The following essential advantages result from this:

a) firstly, the metal with which the rings 2 are formed can be of a hardness chosen in relation only to the required "consumability" characteristics for the ring 2, and thus independently of other hardness and strength requirements which may be specified for the manufacture of the support sleeve 1;

b) again, if the steel cable breaks, it is extremely simple to cut the cable in an intermediate position between the pins, for example in the position T-T, and heat the individual pieces (for example in a suitable furnace) to a temperature such as to melt the brazing metal or the adhesive which retains the rings 2. The rings then separate easily and almost automatically from each sleeve 1, and can be likewise easily fixed on to a new sleeve, if the degree of wear of each ring 2 makes their recovery advisable;

c) moreover, as the fixing is done by central swaging, the loads produced by the cutting action are balanced over the two end rings, so that wear becomes uniform both over the rings 2 and over the sleeve 1. Even in the case of accentuated wear of the sleeve, this wear is produced as shown in Figure 3, i.e. symmetrically at both ends. This means that both the cylinder and the steel cable operate constantly in the correct manner, and thus under best wear conditions;

d) finally, for an unaltered or even reduced pitch P between one cutting element and the next - i.e., in this case between one ring 2 and the next - the distance D between one swaging position on the wire and the next is practically doubled, to the advantage of the diamond wire flexibility.

The invention is not limited to the particular embodiments described and illustrated, and constructional modifications can be made thereto by an expert of the art, but without leaving the scope of protection of the invention.

## Claims

1) A diamond pin for producing diamond wire for cutting stone material, characterized by being formed from a deformable metal sleeve acting as a disposable support, and two diamond rings fixed by brazing or bonding on to the ends of the sleeve.

2) A diamond pin as claimed in claim 1), wherein said sleeve is formed with end shoulders for fixing the diamond rings.

3) A diamond pin as claimed in claim 1), wherein between the two diamond rings the sleeve comprises a free surface portion, in correspondence with which the swaging or punching is carried out for its fixing to the support cable.

4) A diamond wire for cutting stone material, characterized by being formed from a plaited steel support cable on which diamond pins claimed in any one of the preceding claims are fixed by swaging or punching the central part of the relative sleeves.

5) A diamond wire as claimed in claim 4), wherein the diamond pins are fixed on to the support cable at a pitch of the order of double the distance between the two diamond rings of each cylinder.

6) A diamond wire as claimed in claim 4) or 5), wherein the support cable consists of plaited steel wire provided with a continuous abrasion-resistant plastics coating.

**Fig.1**

**Fig.2**

**Fig.2a**

**Fig.3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | FR-A-1 378 362 (E. MEDER S.A.)<br>* Whole document * | 1,3-5 | B 23 D 61/18 |
| D,Y | DE-A-2 545 347 (INSITUT FIZIKI ZEMLI IMENI O.J. SCHMIDTA AKADEMII NAUK SSSR)<br>* Figure; page 3, lines 19-24; page 4, line 19 - page 6, line 19 * | 1,3-5 | |
| A | DE-B-1 118 086 (SUPER-CUT, INC.)<br>* Figures 4,5; page 2, column 4, lines 15-23 * | 1,2 | |
| A | US-A-4 273 169 (P.W. BAENEN)<br>* Figures 4,6; column 3, lines 22-42 * | 1,3,4 | |
| A | DE-A-1 949 194 (THE CARBORUNDUM CO.)<br>* Figures 4-7; page 6, lines 9-15 * | 1,2,6 | TECHNICAL FIELDS SEARCHED (Int. Cl.4)<br><br>B 23 D<br>B 28 D |
| A | FR-E- 72 179 (H.-M. LEFEVRE)<br>* Figure 2; page 2, column 1, paragraph 6 * | 2 | |

--- -/-

The present search report has been drawn up for all claims

| Place of search | Date of completion of the search | Examiner |
|---|---|---|
| THE HAGUE | 21-11-1986 | MAJERUS H.M.P. |

**European Patent Office**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| D,A | US-A-3 847 569 (H.A. SNOW)<br>* Figure 3; column 3, lines 22-32 *<br><br>--- | 1-4 | |
| D,A | US-A-4 097 246 (N.R. OLSON)<br>* Figure 9; column 4, lines 22-29 *<br><br>--- | 1,3 | |
| D,A | FR-A-2 106 017 (D.H. PROWSE AND CO. LTD.)<br>* Figures 6,7; page 5, lines 24-28 *<br><br>----- | 1,3 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 21-11-1986 | MAJERUS H.M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82